# EUROPEAN PATENT SPECIFICATION

(11) **EP 2 508 750 B1**
(45) Date of publication and mention of the grant of the patent: **17.06.2015**
(21) Application number: 11160969.9
(22) Date of filing: 04.04.2011
(51) Int. Cl.: F03D 1/06, F03D 9/00

(54) **Method of optimising a wind park construction**
Verfahren zur Optimierung einer Windparkkonstruktion
Procédé d'optimisation de construction de parc d'éoliennes

(43) Date of publication of application: 10.10.2012
(73) Proprietor: Siemens Aktiengesellschaft, 80333 München (DE)
(72) Inventor: Nielsen, Soeren E., 8660 Skanderborg (DK)

(56) References cited:
- EP-A1- 1 314 885
- EP-A2- 1 748 184
- EP-A2- 2 128 441
- US-A1- 2010 138 201

## Description

The invention describes a method of optimising a wind park construction. The invention further describes a wind turbine for such a wind park and a wind park with such wind turbines.

A wind turbine generates acoustic noise during operation. The acceptance of wind energy as a source of power may depend on the perceived level of noise disturbance. Various methods of optimising a wind park before its actual construction are known, in which knowledge about the noise levels that will be generated by the wind turbines is used, together with knowledge about noise-sensitive areas, to determine acceptable positions and configurations of the wind turbines of the wind park, so that one or more criteria can be met. US 201070138201 A1 for example discloses a method for enhancement of a wind plant layout that takes into consideration the noise perceived at certain zones in the neighbourhood of the wind park, and/or to maximise the power output. Before actually constructing the wind park, therefore, the size and position of each wind turbine can be determined in advance.

While the noise can be perceived to originate from the wind park as a whole, a specific wind turbine may also be identified as a contributor to the perceived noise. It is a known problem that a wind turbine blade design optimised for higher energy output of the turbine is also associated with an undesirably high level of acoustic noise. The noise emissions of a wind turbine could be reduced by providing the wind turbine with a smaller rotor blade diameter, i.e. by using shorter blades. In another approach, a lower rotational velocity could be used. The pitch angle of the blades of the wind turbine could also be altered, for example to face more steeply into the wind. However, all of these measures are directly related to a reduction in the energy efficiency of a wind turbine. EP 1 314 885 A1 teaches the use of a long serrated panel attached to the trailing edge of a blade in order to increase the efficiency of the wind turbine. However, such a serrated panel can increase the noise level generated by such a wind turbine, so that a wind park comprising a plurality of such wind turbines might generate an unacceptably high level of noise.

Therefore, it is an object of the invention to provide a method of optimising a wind park construction to reduce the noise emissions of the wind park.

The object of the invention is achieved by a method of optimising a wind park construction according to claim 1, by a wind turbine for such a wind park according to claim 10 and by a wind park according to claim 11.

According to the invention, a method of optimising the construction of a wind park, comprising at least a first wind turbine and a second wind turbine, comprises the steps of selecting a first blade topology for the first wind turbine based on a noise optimisation parameter which is measured and/or predicted at a reference position at a distance from the wind park, wherein the first blade topology is associated with low noise emissions and a correspondingly low energy efficiency; and selecting a second blade topology for the second wind turbine based on an energy efficiency optimisation parameter such that the second wind turbine has a greater level of noise emission than the first wind turbine.

The construction of a wind park comprises the assembly and/or planning of a new wind park or the modification of an already operational wind park whose noise emission lies above a threshold, e.g. a threshold acceptable to the people living within acoustic range of the wind park. For planning purposes, the method according to the invention could be used for simulating the noise emissions, for example in form of simulation software running on a computer. In this way, the method according to the invention makes it possible to discover or determine an optimised wind park with an arrangement of wind turbines of the first and second type that keeps the noise emissions below a threshold.

A wind park according to the invention comprises at least a first wind turbine and a second wind turbine, wherein
- a first blade topology is selected for the first wind turbine depending on a noise optimisation parameter which is measured and/or predicted at a reference position at a distance from the wind park, and wherein the first blade topology is associated with low noise emissions and a correspondingly low energy efficiency; and
- a second blade topology is selected for the second wind turbine depending on an energy efficiency optimization parameter such that the second wind turbine has a greater level of noise emission than the first wind turbine.

Accordingly, such a wind park comprises a plurality of first wind turbines and second wind turbines. The wind park is optimised in respect to energy efficiency while simultaneously maintaining the noise emissions below an established threshold. That means that the energy efficiency is maximised up to degree allowed by or compatible with the acceptable threshold for noise.

Particularly advantageous embodiments and features of the invention are defined in dependent claims, as revealed hereinafter. Features of the various embodiments described may be combined as appropriate.

A new wind park to be planned comprises a plurality of positions or sites for the wind turbines. The wind park to be planned could be provided with two types of wind turbines, e.g. wind turbines of a first type (referred to as "first wind turbines" in the following) and wind turbines of a second type referred to as "second wind turbines" in the following). The first wind turbines are optimised with respect to noise emissions and only generate a low level of noise. Accordingly, a first wind turbine has a blade topology associated with low noise emissions, and a corresponding low energy efficiency. The second wind turbine has a blade topology that is optimised with respect to energy efficiency. Accordingly, the total sum of power, e.g. the Annual Energy Production (AEP) is maximised for the second wind turbine. A second wind turbine therefore has a greater level of noise emission than a first wind turbine.

For each of the positions of wind turbines of the new wind park, one of the first or second wind turbines is chosen. The first wind turbine type is selected if the level of noise measured in an already operational wind park, or predicted in simulation for a planned wind park, exceeds a chosen threshold. The noise is measured or predicted in respect to a reference position at a distance removed from the wind park. That means that the reference position is outside of the wind park. The reference position could be the location of an inhabited area, for example a village or suburb. Accordingly, the wind park construction will be optimised in respect to noise disturbance at an inhabited area close to the wind park, e.g. to keep the noise disturbance below a threshold acceptable to the people living in that area. In this way, specific wind park locations are designated for wind turbines of the first type. For the remaining locations wind turbines of the second type are selected. This will lead to a wind park with a mixture of first and second wind turbines optimised with respect to the energy efficiency of the wind park as well as noise emission, whereby the noise disturbance will be kept below the acceptable threshold in a neighbouring inhabited area.

Further, the method could also be used for upgrading or modifying an already operational wind parks that has a noise emission which exceeds an acceptable threshold. It may be assumed in the following that such an already operational wind park comprises essentially only wind turbines of the second type, i.e. wind turbines that have been optimised with respect to their energy output, so that the already working wind part is only optimised in respect to energy efficiency. Upgrading may include a planning or simulation step before carrying out any actual amendments on the wind turbines of the wind park, in order to determine which of the second wind turbines have to be replaced by first wind turbines. In upgrading such a wind park, some second wind turbines are identified on the basis of their acoustic effect on the inhabited area and are replaced by wind turbines of the first type.

A wind turbine for a wind park according to the invention comprises a number of blades with trailing edges that can be optimized according to at least a first blade topology and a second blade topology, wherein the first blade topology relates to a noise optimisation parameter which is measured and/or predicted at a reference position at a distance from the wind park, and the second blade topology relates to an energy efficiency optimisation parameter. Accordingly, the first wind turbines and the second wind turbines differ only in respect to their blade topologies from each other. Therefore, it is possible to transform a wind turbine from the second type to a wind turbine of the first type, and vice versa, simply by amending or altering the blade topology.

A preferred embodiment of the wind turbine according to the invention is characterized in that the first blade topology defines a first shape of a trailing edge of a blade of the first wind turbine and the second blade topology defines a second shape of a trailing edge of a blade of the second wind turbine. Accordingly, only the shapes of the training edges of the blades will changed, whereby other parts of the blades and the wind turbine remain unchanged.

The noise emission of a wind turbine can be reduced by a serrated blade design. For example, the trailing edge could be realised with a serrated outer edge, and/or a serrated surface relief structure. The serrated design might be located on the lee-ward side of the blade. The serrated design might comprise a zig-zag outer edge over that part of the trailing edge in combination with a serrated relief pattern on the surface of that part of the trailing edge. The serrated design or pattern could extend along the entire length of the blade. In a preferred embodiment, however, the trailing edge is serrated only over a first part. Such a partial serrated design could be enough to reduce the noise emissions below a threshold level, while only decreasing the energy efficiency of the turbine to a relatively small degree. Therefore, it is not necessary to use blades with trailing edges serrated over their entire lengths or surfaces. Advantageously, therefore, the energy efficiency is only minimally affected by the noise optimisation of the blades.

To 'convert' a wind turbine from the second type to the first type, or vice versa, the blades of the wind turbine could be detached, removed, and replaced with blades of the other type. However, such a procedure can be time-consuming and costly. Therefore, in a particularly preferred embodiment of the invention the trailing edge of a blade comprises a first part and a second part. For example, a blade of a wind turbine of the second type can comprise a replacement part forming a part of the trailing edge. The replacement part is detachably mounted on the blade. This part of the blade can be removed and replaced by a serrated replacement part, with a serrated design as described above that generates less noise emissions than the original essentially flat or non-serrated part. Such a blade design allows a wind turbine to be transformed from a second type to a first type, and vice versa, simply by exchanging the replacement parts of the blade trailing edges. A dismantling of the entire wind turbine and the construction of another is therefore not necessary. It is also not necessary to detach an entire blade from the hub, since only the replacement part of the blade need be detached and exchanged. A modification of an existing wind park to meet altered requirements with respect to noise thresholds can therefore be carried out in an uncomplicated and economical manner.

The energy efficiency of a wind turbine will increase with a higher lift-to-drag ratio. The lift-to-drag ratio is expressed as the effort required to turn the rotor blades of the wind turbine divided by the drag created by the blades as they move through the air.

In a further preferred embodiment of the invention, therefore, the first part of the blade is located in a region at the outermost end of the blade. Accordingly, the serrations are in the region of the blade tip. The velocity of a blade is highest at its tip, and therefore most of the noise is generated by the tip. Therefore, by arranging the serrations close to the tips of the blades, the noise generated by that wind turbine can be reduced most effectively without unduly worsening the lift-to-drag ratio.

In a further preferred embodiment, the first part extends over at most one third of the total length of the blade. This is an optimised trade-off between minimizing noise generation in the region of the blade tips and maximizing the energy efficiency of the wind turbine.

All parts of a blade could have the same degree of rigidity or stiffness. Generally, a stiff blade is preferred if the wind turbine is to be optimised with respect to its energy efficiency. However, a stiff trailing edge region may be associated with a higher level of noise. Therefore, in a further preferred embodiment, the first part is more flexible than the second part. The first part could be the region of the blade tip. Here, the blade tip could have a certain degree of freedom, for example freedom to oscillate. This reduces the noise generated at the blade tips.

Other objects and features of the invention will become apparent from the following detailed description considered in conjunction with the accompanying drawings. It is to be understood, however, that the drawings are designed solely for the purposes of illustration and not as a definition of limitations of the invention.
Fig. 1 shows a schematic representation of an embodiment of a wind park according to the invention;
Fig. 2 shows a schematic representation of an embodiment of a wind turbine of the first type,
Fig. 3 shows a schematic representation of an embodiment of a wind turbine of the second,
Fig. 4 shows a schematic representation of an embodiment of a blade wind turbine of the first type, and
Fig. 5 shows a schematic representation of an embodiment of a blade wind turbine of the second.

In the drawings, like reference numbers refer to like objects throughout. Objects in the drawings are not necessarily drawn to scale.

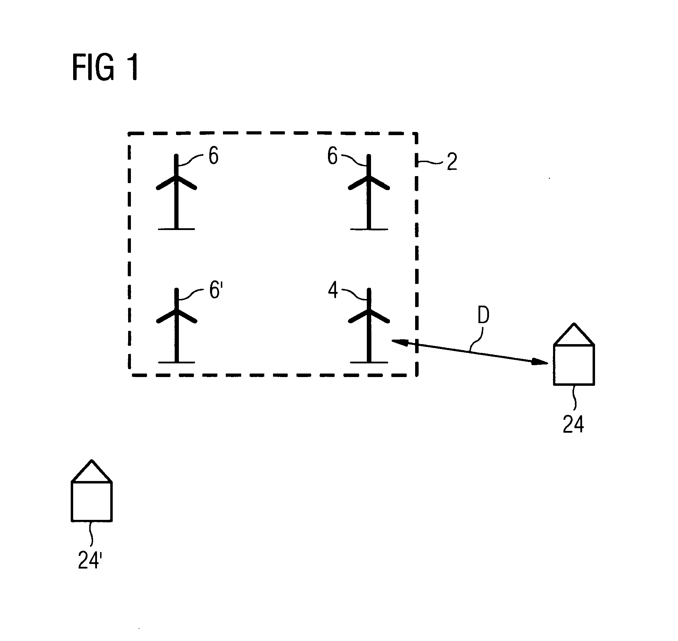

Fig. 1 shows an embodiment of a wind park 2 according to the present invention. The wind park 2 comprises four wind turbines 4, 6, 6' of two types. The first wind turbine 4 of the first type is optimised in respect to low noise emissions, whereby the other second wind turbines 6, 6' of the second type are optimised in respect to energy efficiency. That means that the second three wind turbines 6, 6' have an optimised lift-to-drag ratio. A higher lift-to-drag ratio increases the energy efficiency of a wind turbine.

Outside of the wind park 2 is an inhabited area indicated by a house 24. As can be seen from Fig. 1 the first wind turbine 4 is at a position closest in respect to the house 24. Accordingly, at the position closest to the house 24 a first wind turbine 4 optimised in respect to low noise is arranged. This keeps the noise emissions, perceived in the inhabited area, below a threshold acceptable to the people living there. The remaining second wind turbines 6, 6' are energy optimised. Therefore, the energy output of the wind park 2 is also as high as possible since only one of the wind turbines 4, 6, 6' is a first wind turbine 4.

In the case of a new wind park 2 to be planned, the planning can commence with a virtual wind park 2 comprising only second wind turbines 6, 6' at all positions. Then the noise will be estimated, for example by simulation, with respect to an inhabited area 24. In a next step, one of the second wind turbines 6, 6' is identified according to its distance from the inhabited area 24 and will be replaced by a first wind turbine 4 as shown in Fig. 1. Subsequently, the altered noise level can be estimated. These steps of 'replacing' one or more noisy wind turbines by less noisy wind turbines can be repeated until the level of noise at the inhabited area 24 is estimated to lie below the threshold level.

A modification or alteration of a wind park 2 may become necessary if a second inhabited area or house 24' is constructed close to the wind park 2, for example. To determine any necessary modifications, the noise is measured at the new house 24'. If the measured noise is above an acceptable threshold, suitable steps can be taken. For example, the second wind turbine 6' closest to the new house 24' can be altered to a wind turbine of the first type.

In the following the two types of wind turbines 4, 6 and the steps in their transformations are described in detail.

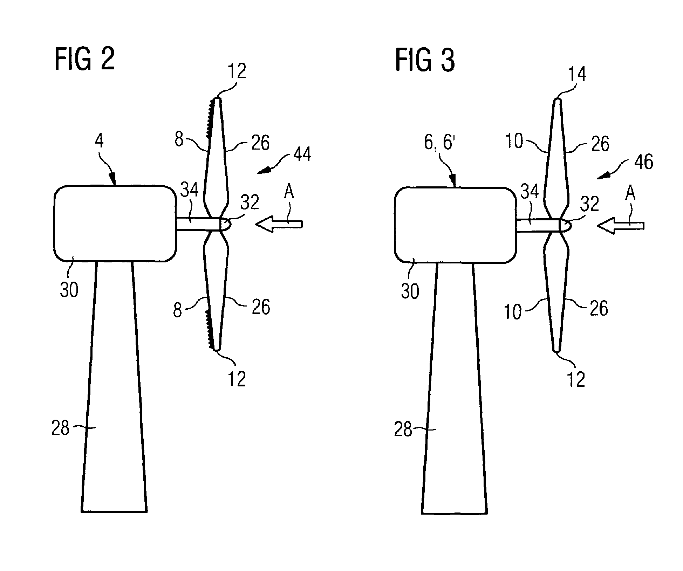

Fig. 2 shows an embodiment of the first wind turbine 4 according to the present invention.

The first wind turbine 4 comprises a tower 28, a nacelle 30 supported by the tower 28, and a hub 32 supported by the nacelle 30. Blades 12 are arranged on and fixed to the hub 32. Details regarding the usual operation of a wind turbine are not in the focus of the invention and will therefore not be described in detail hereinafter. Only those items, elements and systems that are relevant to the invention will be elucidated in the following description. The tower 28, the nacelle 30 and the hub 32 are conventional elements of the first wind turbine 4 und will therefore not be illustrated in more detail hereinafter.

The blades 12 have leading edges 26 and trailing edges 8. The leading edges 12 face into the direction A of air-flow before the trailing edges 8.

Fig. 3 shows an embodiment of the second wind turbine 6, 6' according to the present invention. The second wind turbine 6, 6' of Fig. 3 has the same tower 28, nacelle 30 and hub 32 of Fig. 1. Only the blades 14 of the second wind turbine 6, 6' are different from the first wind turbine 4 of Fig. 2.

The blades 14 have leading edges 26 and trailing edges 10 as described above.

The blades 12 of the first wind turbine 4 have a first blade topology 44 which defines the shape of trailing edges 8. The blades 14 of the second wind turbine 6, 6'have a second blade topology 46 which defines the shape of trailing edges 10.

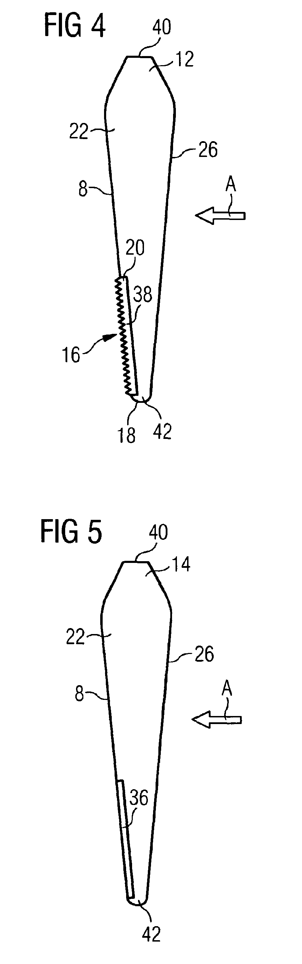

The differences of the blades 12 of the first wind turbine 4 and of the blades 10 of the second wind turbine 6 are now explained in detail with reference to the Fig. 4 and 5.

It can seen from Fig. 4 and 5 that both blades 12, 14 have a first end 40 with which the blades 12, 14 are mounted to the hub 32. A blade tip 42 as at the opposite or outermost end of the blade 26.

A blade 12, 14 is divided on its trailing edge 8, 10 in a first part 20, 36 and a second part 22. The first part 20, 36 extends over at most one third of the total length of the blade 12, 14, e.g. from the first end 40 to the blade tip 42. Accordingly, the second part 22 extends over two thirds of the length of the blades 12, 14.

The first part 20 of the blade 12 in Fig. 4 has a serrated design, in this example a saw-tooth edge, extending partly along the length of the blade 12. This saw-tooth pattern 16 reduces the generation of noise at the outermost end 18 of the blade 12 near the blade tip 42 where the noise generation is high due to the high velocity of the blade 14 at the blade tip 42.

In the first part 20 the trailing edge 8 of the first wind turbine 4 is formed by a serrated replacement part 38 with the saw tooth design 16. The serrated replacement part 38 is detachably mounted to the blade 8.

Further, the trailing edge 8 in the first part 20 of the blade 12 is more flexible compared to the trailing edge along the second part 22 of the blade. Therefore, this part of the blade 12 can oscillate with the blade tip 42 to further reduce the noise generated by that blade during operation of the wind turbine.

In contrast thereto, the blade 14 of the second wind turbine 6, 6' comprises a replacement part 36 without such a serrated or saw-tooth design 16. The essentially flat replacement part 36 is detachably mounted to the blade 10. The replacement part 36 is associated with a favourably high lift-to-drag ratio and can therefore be used to optimise the energy efficiency of the wind turbine, but will result in a relatively high level of noise.

The detachable mounting of the replacement part 36 allows to remove the replacement part 36 from blade 12 of the second wind turbine 6, 6' and to insert the serrated replacement part 36 instead, transforming the blade 12 to a blade 10. In this way, a wind turbine of the second type can be transformed quickly and economically to a wind turbine of the first type.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements.

## Claims

1. A method of optimising a wind park construction, which wind park (2) comprises at least a first wind turbine (4) and a second wind turbine (6, 6'),
**characterised in that**
- a first blade topology (44) is selected for the first wind turbine (4) depending on a noise optimisation parameter which is measured and/or predicted at a reference position (24) at a distance (D) from the wind park (2), wherein the first blade topology (44) is associated with low noise emissions and a correspondingly low energy efficiency; and
- a second blade topology (46) is selected for the second wind turbine (6, 6') depending on an energy efficiency optimisation parameter, such that the second wind turbine (6, 6') has a greater level of noise emission than the first wind turbine (4).

2. A method according to claim 1, wherein the first blade topology (44) defines a first shape of a trailing edge (8, 10) of a blade (12) of the first wind turbine (4) and the second blade topology (46) defines a second shape of a trailing edge (8, 10) of a blade (14) of the second wind turbine (4).

3. A method according to claim 1 or 2, wherein at least the trailing edge (8) of the first wind turbine (4) comprises a first part (20) and a second part (22).

4. A method according to claim 3, wherein the trailing edge (8) is serrated over the first part (20).

5. A method according to claim 4, wherein the first part (20) is located in a region at the outermost end (18) of the blade (12).

6. A method according to claim 5, wherein the first part (20) extends at most one third of the total length of the blade (12).

7. A method according to any one of the claims 3 to 6, wherein the first part (20) is more flexible than the second part (22).

8. A method according to any one of the claims 2 to 7, comprising a step of replacing a non optimized part with a replacement part (36, 38), which is optimized according to the first or second topology.

9. A method according to claim 8, wherein the replacement part (38) comprises a saw-tooth pattern (16).

10. A wind park (2) comprising at least a first wind turbine (4) and a second wind turbine (6, 6'), wherein
- a first blade topology (44) is selected for the first wind turbine (4) depending on a noise optimisation parameter which is measured and/or predicted at a reference position (24) at a distance (D) from the wind park (2), and wherein the first blade topology (44) is associated with low noise emissions and a correspondingly low energy efficiency; and
- a second blade topology (46) is selected for the second wind turbine (6, 6') depending on an energy efficiency optimisation parameter such that the second wind turbine (6, 6') has a greater level of noise emission than the first wind turbine (4).

## Patentansprüche

1. Verfahren zur Optimierung einer Windparkkonstruktion, wobei dieser Windpark (2) mindestens eine erste Windenergieanlage (4) und eine zweite Windenergieanlage (6, 6') umfasst,
**dadurch gekennzeichnet, dass**
- für die erste Windenergieanlage (4) eine erste Rotorblatt-Topologie (44) in Abhängigkeit von einem Geräuschoptimierungsparameter gewählt wird, welcher an einer Referenzposition (24) in einem Abstand (D) von dem Windpark (2) gemessen und/oder vorhergesagt wird, wobei die erste Rotorblatt-Topologie (44) mit niedrigen Geräuschemissionen und einer entsprechend niedrigen Energieeffizienz verbunden ist; und
- für die zweite Windenergieanlage (6, 6') eine zweite Rotorblatt-Topologie (46) in Abhängigkeit von einem Energieeffizienz-Optimierungsparameter gewählt wird, so dass die zweite Windenergieanlage (6, 6') einen höheren Geräuschemissionspegel als die erste Windenergieanlage (4) aufweist.

2. Verfahren nach Anspruch 1, wobei die erste Rotorblatt-Topologie (44) eine erste Form einer Hinterkante (8, 10) eines Rotorblattes (12) der ersten Windenergieanlage (4) definiert und die zweite Rotorblatt-Topologie (46) eine zweite Form einer Hinterkante (8, 10) eines Rotorblattes (14) der zweiten Windenergieanlage (4) definiert.

3. Verfahren nach Anspruch 1 oder 2, wobei wenigstens die Hinterkante (8) der ersten Windenergieanlage (4) einen ersten Teil (20) und einen zweiten Teil (22) umfasst.

4. Verfahren nach Anspruch 3, wobei die Hinterkante (8) über dem ersten Teil (20) gezackt ist.

5. Verfahren nach Anspruch 4, wobei der erste Teil (20) in einem Bereich am äußersten Ende (18) des Rotorblattes (12) angeordnet ist.

6. Verfahren nach Anspruch 5, wobei sich der erste Teil (20) über höchstens ein Drittel der Gesamtlänge des Rotorblattes (12) erstreckt.

7. Verfahren nach einem der Ansprüche 3 bis 6, wobei der erste Teil (20) flexibler als der zweite Teil (22) ist.

8. Verfahren nach einem der Ansprüche 2 bis 7, welches einen Schritt des Ersetzens eines nicht optimierten Teils durch ein Auswechselteil (36, 38), welches entsprechend der ersten oder zweiten Topologie optimiert ist, umfasst.

9. Verfahren nach Anspruch 8, wobei das Auswechselteil (38) ein Sägezahnmuster (16) umfasst.

10. Windpark (2), welcher mindestens eine erste Windenergieanlage (4) und eine zweite Windenergieanlage (6, 6') umfasst, wobei
- für die erste Windenergieanlage (4) eine erste Rotorblatt-Topologie (44) in Abhängigkeit von einem Geräuschoptimierungsparameter gewählt ist, welcher an einer Referenzposition (24) in einem Abstand (D) von dem Windpark (2) gemessen und/oder vorhergesagt wird, und wobei die erste Rotorblatt-Topologie (44) mit niedrigen Geräuschemissionen und einer entsprechend niedrigen Energieeffizienz verbunden ist; und
- für die zweite Windenergieanlage (6, 6') eine zweite Rotorblatt-Topologie (46) in Abhängigkeit von einem Energieeffizienz-Optimierungsparameter gewählt ist, so dass die zweite Windenergieanlage (6, 6') einen höheren Geräuschemissionspegel als die erste Windenergieanlage (4) aufweist.

## Revendications

1. Procédé d'optimisation de construction de parc d'éoliennes, lequel parc (2) d'éoliennes comprend au moins une première éolienne (4) et une deuxième éolienne (6, 6'),
**caractérisé en ce que**
- une première topologie (44) de pales est sélectionnée pour la première éolienne (4) en fonction d'un paramètre d'optimisation de bruit qui est mesuré et/ou prédit en une position de référence (24) à une distance (D) du parc (2) d'éoliennes, dans lequel la première topologie (44) de pales est associée avec de faibles émissions de bruit et une efficacité énergétique faible de manière correspondante ; et
- une deuxième topologie (46) de pales est sélectionnée pour la deuxième éolienne (6, 6') en fonction d'un paramètre d'optimisation d'efficacité énergétique, de telle sorte que la deuxième éolienne (6, 6') a un niveau d'émission de bruit supérieur à la première éolienne (4).

2. Procédé selon la revendication 1, dans lequel la première topologie (44) de pales définit une première forme d'un bord de fuite (8, 10) d'une pale (12) de la première éolienne (4) et la deuxième topologie (46) de pales définit une deuxième forme d'un bord de fuite (8, 10) d'une pale (14) de la deuxième éolienne (4).

3. Procédé selon la revendication 1 ou 2, dans lequel au moins le bord de fuite (8) de la première éolienne (4) comprend une première partie (20) et une deuxième partie (22).

4. Procédé selon la revendication 3, dans lequel le bord de fuite (8) est dentelé sur la première partie (20).

5. Procédé selon la revendication 4, dans lequel la première partie (20) est située dans une région à l'extrémité la plus extérieure (18) de la pale (12).

6. Procédé selon la revendication 5, dans lequel la première partie (20) s'étend au plus sur un tiers de la longueur totale de la pale (12).

7. Procédé selon l'une quelconque des revendications 3 à 6, dans lequel la première partie (20) est plus flexible que la deuxième partie (22).

8. Procédé selon l'une quelconque des revendications 2 à 7, comprenant une étape de remplacement d'une partie non optimisée par une partie de remplacement (36, 38), qui est optimisée conformément à la première ou la deuxième topologie.

9. Procédé selon la revendication 8, dans lequel la partie de remplacement (38) comprend un motif en dents de scie (16).

10. Parc (2) d'éoliennes comprenant au moins une première éolienne (4) et une deuxième éolienne (6, 6'), dans lequel
- une première topologie (44) de pales est sélectionnée pour la première éolienne (4) en fonction d'un paramètre d'optimisation de bruit qui est mesuré et/ou prédit en une position de référence (24) à une distance (D) du parc (2) d'éoliennes, et dans lequel la première topologie (44) de pales est associée avec de faibles émissions de bruit et une efficacité énergétique faible de manière correspondante ; et
- une deuxième topologie (46) de pales est sélectionnée pour la deuxième éolienne (6, 6') en fonction d'un paramètre d'optimisation d'efficacité énergétique, de telle sorte que la deuxième éolienne (6, 6') a un niveau d'émission de bruit supérieur à la première éolienne (4).
